# FASCICULE DE BREVET EUROPEEN

(11) **EP 3 765 868 B1**
(45) Date de publication et mention de la délivrance du brevet: **14.08.2024**
(21) Numéro de dépôt: 19708864.4
(22) Date de dépôt: 12.03.2019
(51) Int. Cl.: G01S 17/93, G01S 13/93, G01S 17/02

(54) **PROCÉDÉ ROBUSTE DE DÉTECTION D'OBSTACLES, NOTAMMENT POUR VÉHICULES AUTONOMES**
ROBUSTES VERFAHREN ZUR ERKENNUNG VON HINDERNISSEN, INSBESONDERE FÜR AUTONOME FAHRZEUGE
ROBUST METHOD FOR DETECTING OBSTACLES, IN PARTICULAR FOR AUTONOMOUS VEHICLES

(30) Priorité: 14.03.2018 FR 1852188
(43) Date de publication de la demande: 20.01.2021
(73) Titulaire: Ampere SAS, 92100 Boulogne-Billancourt (FR)
(72) Inventeur: MITTET, Marie-Anne, 91120 Palaiseau (FR); CAYOL, Olivier, 78000 Versailles (FR); LAVABRE, Marc, 92420 VAUCRESSON (FR)
(74) Mandataire: Renault Group
(86) Numéro de dépôt international: PCT/EP2019/056074
(87) Numéro de publication internationale: WO 2019/175130

(56) Documents cités:
- US-B1- 8 996 228
- US-B1- 9 052 721
- US-B1- 9 221 396

## Description

### Domaine technique :

La présente invention concerne le domaine de la conduite autonome, c'est-à-dire des véhicules automobiles sans conducteur ou dans lesquels le conducteur peut être libéré au moins temporairement de toute tâche de conduite. L'invention s'applique notamment, mais pas exclusivement, aux véhicules particuliers.

### Art antérieur et problème technique :

Un préalable à la conduite autonome est la connaissance de l'environnement général du véhicule, qu'on désigne couramment par « awareness » selon une terminologie anglo-saxonne. Il s'agit non seulement de reconnaître l'infrastructure routière permanente, comme la route, le marquage au sol ou les panneaux de signalisation, mais également de détecter les obstacles temporaires, notamment les autres véhicules et les piétons, qu'ils soient mobiles ou immobiles. Outre le caractère sans cesse évolutif de cet environnement, qui nécessite une remise en cause continue de la base de connaissance acquise, une difficulté majeure est la diversité des situations pouvant se présenter, qui tient notamment à la diversité de nature des obstacles. Afin de détecter les obstacles qui entourent le véhicule, il est nécessaire d'utiliser des capteurs de perception. Cependant, ceux-ci peuvent souffrir d'erreur de détection, ou pire de non détection. Il s'agit là d'une problématique que la présente invention se propose de traiter.

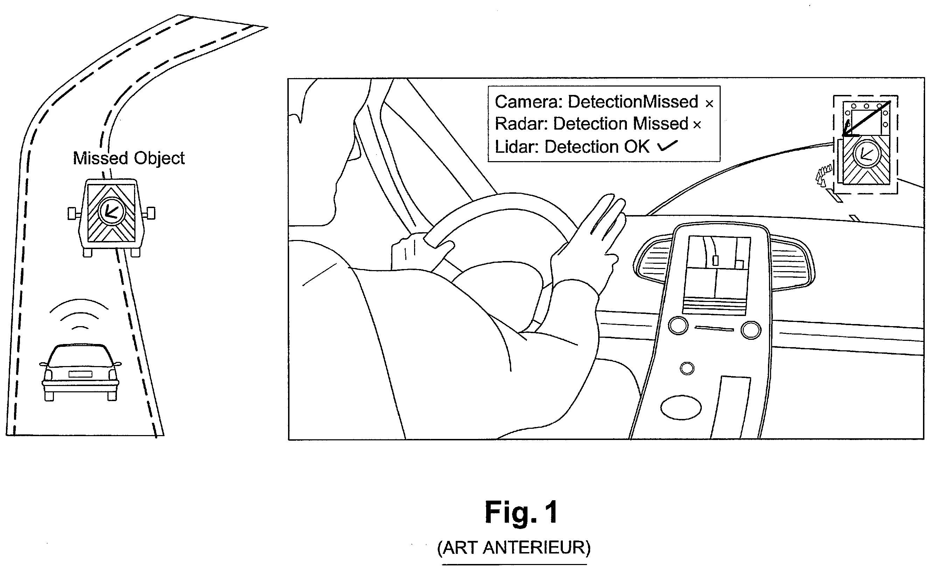

Dans le but surmonter ces difficultés, la stratégie communément adoptée pour optimiser la robustesse de détection des obstacles consiste à diversifier les technologies de capteur, notamment à combiner ou « fusionner » des données issues de caméras, de radars ou encore de lidars. L'idée étant que, si l'une des technologies de capteur manque une détection, c'est-à-dire ne signale pas la présence d'un obstacle bien présent, alors on espère que les autres technologies compensent l'erreur en le détectant. Malgré cette diversification des technologies de capteur, il subsiste encore de nombreuses situations problématiques, comme par exemple celle illustrée par la figure 1. Sur cette figure, un panneau de signalisation est embarqué sur un véhicule de service. Dans cette situation où le véhicule de service est positionné sur le bas-côté de la voie, la caméra le catégorise à tort comme un panneau de signalisation, ne représentant aucun danger donc (« Détection missed » selon la terminologie anglo-saxonne). Le radar considère quant à lui le véhicule de service comme un écho « fantôme » ou « ghost » selon la terminologie anglo-saxonne, c'est-à-dire qu'il le considère non pas comme un objet réel, mais comme un écho parasite à négliger, ne représentant aucun danger non plus (« Détection missed » selon la terminologie anglo-saxonne).

Enfin, les lidars perçoivent ce camion (« Détection OK »), mais ne sont pas considéréser car minoritaires en nombre. A l'heure actuelle, les données lidar, peuvent se présenter sous la forme de données brutes appelées « nuages de points». Mais à ce jour, ce ne sont pas ces nuages de points qui sont pris en compte dans le processus de fusion pour établir les détections d'obstacles imprévus. La fusion de données utilise les objets détectés issus des traitements effectués sur ces nuages de points.

On comprend donc que, dans la situation particulière du véhicule de service portant un panneau de signalisation (comme dans d'autres situations qui seront détaillées par la suite), la diversification des technologies de capteur crée la confusion, voire même une apparente incohérence : comment interpréter l'incohérence entre les données issues du lidar (qui détectent un obstacle) et les autres capteurs (qui ne détectent rien)? Y a-t-il un obstacle réel sur la route non détecté par le processus de fusion ? Ou est-ce une fausse alerte due à un dysfonctionnement des lidars ? En tous cas, la détection est ratée (« Missed object » selon la terminologie anglo-saxonne). Il s'agit là d'un problème que la présente invention se propose de résoudre.

Dans le but de résoudre ce problème, le document US2013242284 propose une méthode de détection des obstacles par fusion non seulement des données issues des systèmes radar et caméra, mais également des données issues du lidar. En complétant les systèmes de perception classiques avec le nuage de points lidar, cette solution permet bien d'améliorer la robustesse de détection : il y a moins d'objet réels non détectés. Mais il reste des objets manqués, souvent à cause de l'incohérence apparente entre les données que l'on tente de fusionner, que cette solution ne peut pas toujours surmonter. Ainsi, il est fort probable que le véhicule de service portant un panneau sur le bas-côté ne serait pas détecté, car les seules données lidar ne suffiraient sans doute pas au processus de fusion pour confirmer une détection. Il s'agit là encore d'un problème que la présente invention se propose de résoudre.

Le document US9221396B1 divulgue également une méthode de détection d'obstacles présentant des inconvénients similaires.

### Résumé de l'invention :

L'invention a notamment pour but de diminuer le nombre d'objets manqués et de diminuer les fausses détections, ceci en résolvant a *posteriori* les incohérences entre le nuage de points lidars et les données de cartographie. A cet effet, l'invention a pour objet un procédé de détection d'obstacles dans une zone géographique donnée selon la revendication 1.

Des aspects avantageux de l'invention sont définis par les revendications dépendantes.

L'invention a également pour objet un système comportant des moyens matériels et logiciels pour mettre en oeuvre un tel procédé, ainsi qu'un véhicule automobile comportant un tel système.

### Avantages :

La présente invention a encore pour principal avantage son faible coût, puisqu'elle utilise des capteurs et des calculateurs déjà embarqués dans la plupart des véhicules actuels.

### Description des figures :

D'autres caractéristiques et avantages de l'invention apparaîtront à l'aide de la description qui suit faite en regard de dessins annexés qui représentent :
- la figure 1, par une capture d'écran, un exemple de procédé selon l'art antérieur;
- les figures 2 à 5, par des schémas, des diagrammes et des captures d'écran, un exemple de réalisation selon l'invention.

### Description de l'invention à partir des figures :

Le lidar est une technologie de pointe qui permet de représenter précisément l'environnement qui entoure le capteur. Celui-ci permet non seulement de mesurer des distances, mais également de mesurer le caractère réfléchissant des objets qui l'entourent. Ainsi, il est possible d'obtenir un nuage de points 3D représentant l'environnement. Pour chacun des points, on pourra également associer une valeur de réflectivité. L'invention repose sur une comparaison entre ce nuage de points et une « signature » de ce qui est attendu sur la route, cette signature étant déduite d'une carte 3D mémorisée dans le véhicule. La carte 3D utilisée comporte des informations sur l'infrastructure (lignes, barrières, panneaux, etc...) mais est vide de tout autre objet.

Afin de pouvoir effectuer cette comparaison, il est nécessaire de localiser précisément le véhicule dans la carte 3D que l'on souhaite exploiter. Une fois localisé, il est possible de comparer la mesure effectuée avec la signature de la route attendue. La signature de la route attendue est éventuellement complétée par le ou les objets détectés par les caméras et/ou les radars. Si le nuage de point issu du lidar correspond parfaitement à la signature, alors il y a cohérence et on peut affirmer avec certitude qu'il n'y a pas d'obstacles devant le véhicule sur la route (notamment pas d'objet manqué). Par contre, dès lors que le nuage de points ne correspond pas à la signature, alors il y a incohérence et risque qu'un obstacle devant le véhicule ait été manqué. Cependant, il est important de noter qu'il sera presque impossible d'obtenir une correspondance parfaite. En effet, plusieurs phénomènes peuvent impacter la mesure. On distinguera plusieurs sources d'erreurs : l'imprécision de la localisation du véhicule, ainsi que les effets de roulis et de tangage qu'il subit, les erreurs présentes dans les cartes utilisées, ou encore un dysfonctionnement du lidar. La présente invention propose également de traiter ces différentes sources d'erreur. Dans le présent mode de réalisation, les spécifications envisagées pour des performances satisfaisantes sont les suivantes :
- la taille du plus petit objet à détecter est de quelques centimètres : cela représente la taille à partir de laquelle le pneu du véhicule peut subir un dommage en cas d'impact,
- le champ de vision est ouvert à 180° vers l'avant du véhicule ;
- le champ de vision s'étend latéralement non seulement au-delà des bandes latérales délimitant les voies, mais également jusqu'à 50 mètres au-delà des bandes d'arrêt d'urgence et des barrières de sécurité, (on doit pouvoir détecter un piéton sur le bas-côté de la chaussée) ;
- le champ de vision s'étend longitudinalement au-delà de 200 mètres (marge d'arrêt du véhicule) ;
- le champ de vision s'étend à 25 mètres en hauteur (ce qui correspond à une hauteur de 5 mètres pour passer au-dessus d'un camion, suivie d'une pente à 10% sur 200 mètres).

Compte tenu de l'ensemble de ces facteurs, il convient de définir un niveau de corrélation, c'est-à-dire la mise au point d'une valeur qui représente le niveau de corrélation entre la carte 3D et les données issues du lidar. Si ces deux informations corrèlent parfaitement, alors on a un niveau de corrélation égal à 1. A l'inverse, si ces deux sources de données ne corrèlent pas du tout, on aura un niveau de corrélation égal à 0. Dans un tel mode de réalisation, on peut confirmer ou infirmer des détections en comparant le niveau de corrélation à des seuils prédéfinis compris entre 0 et 1. On peut aussi considérer qu'un niveau de corrélation est proche de 1 lorsqu'il est supérieur à un seuil prédéfini compris entre 0,5 et 1, par exemple 0,75. On peut considérer également qu'un niveau de corrélation est éloigné de 1 lorsqu'il est inférieur à un seuil prédéfini compris entre 0 et 0,5, par exemple 0.25. Dans tous les cas, les valeurs de ces seuils dépendent de nombreux facteurs liés au type de capteurs et à leur implémentation sur véhicule, c'est pourquoi elles devront être préalablement définies par calibration lors de phases de mise au point sur véhicule. Aucune valeur fixe, c'est-à-dire identique quelle que soit l'implémentation sur véhicule, ne pourrait conduire à des résultats satisfaisants.

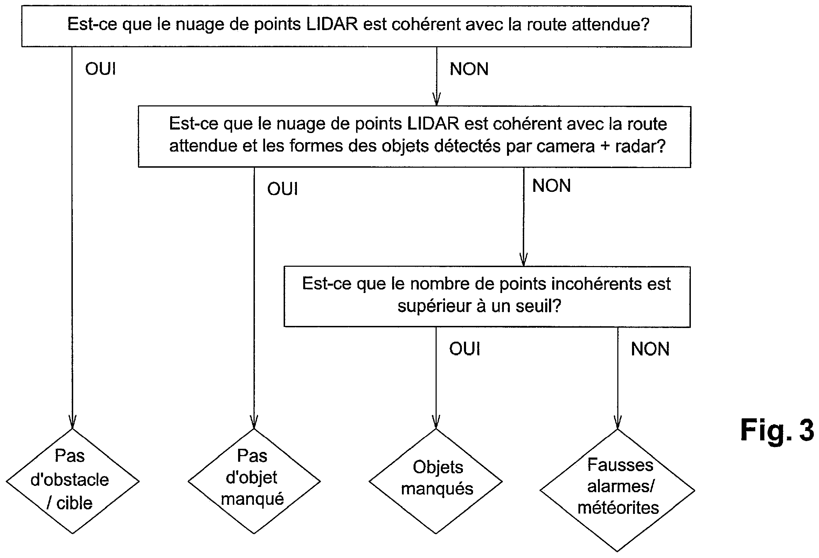

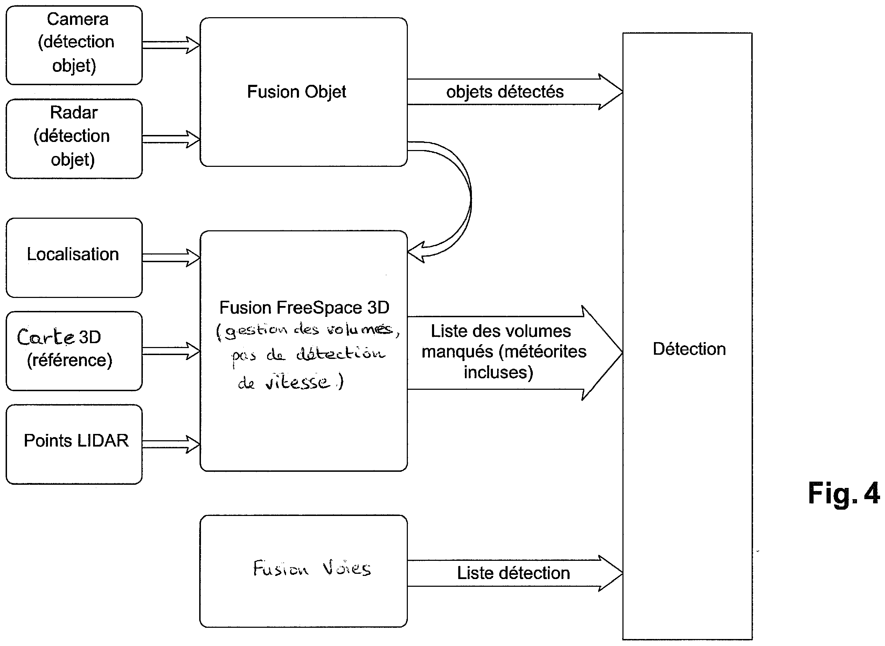

Afin d'évaluer une quelconque incohérence entre les mesures des capteurs et la carte 3D, l'invention propose une logique de traitement illustrée par les figures 3 et 4, qui détecte les objets manqués par les capteurs classiques, tout en s'affranchissant des fausses détections.

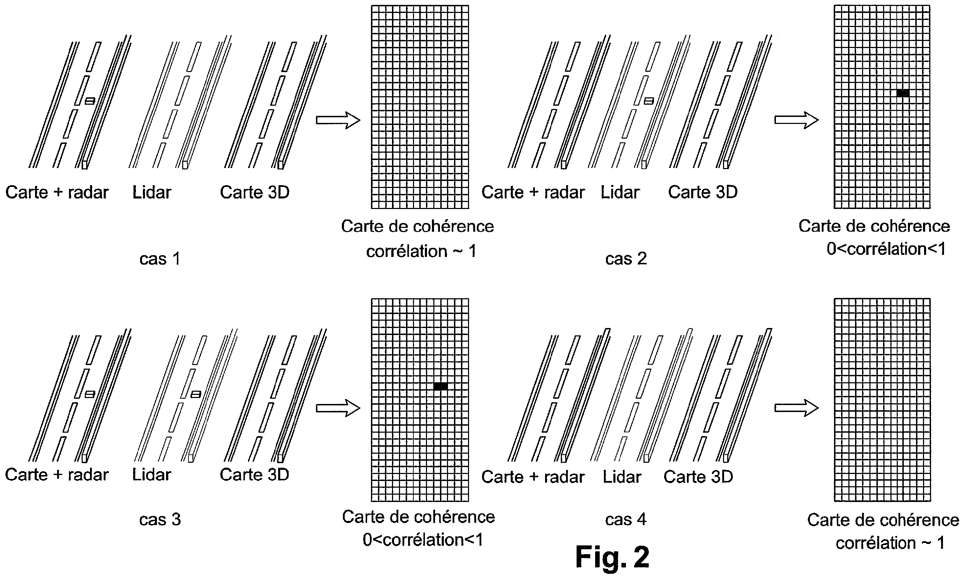

Si l'on considère l'un des buts essentiels de cette invention, à savoir utiliser la carte 3D et le lidar comme aide pour la détection d'obstacle, nous pouvons résumer les différentes situations rencontrées dans le tableau suivant, qui reprend les cas illustrés par la figure 2 :

| | Détection | | | |
|---|---|---|---|---|
| Capteurs | Cas 1 | Cas 2 | Cas 3 | Cas 4 |
| Caméra + Radar | Objets détectés | Pas d'objets détectés | Objets détectés | Pas d'objets détectés |
| Lidar | Nuage de points | Nuage de points + objets | Nuage de points + objets | Nuage de points |
| Comparaison avec la carte 3D (+ niveau de corrélation associé) | Cohérence avec la carte & X₁ | Il existe une incohérence entre la carte et le nuage lidar & X₂ | Cohérence avec la carte & X₃ | Cohérence avec la carte & X₄ |
| Conclusion | Présence d'objet en fonction de la valeur de X₁ | Présence d'objet en fonction de la valeur de X₂ | Présence d'objet en fonction de la valeur de X₃ | Présence d'objet en fonction de la valeur de X₄ |

Il est important de rappeler que les capteurs de type caméra et radar renvoient des objets et non des données bruts. Concernant le lidar, nous considérons qu'il renvoie quant à lui des données brutes. Nous disposons ainsi des nuages de points bruts renvoyés par le capteur directement. Par ailleurs, on considère ici que l'erreur de localisation du véhicule est maitrisée et connue.

Nous pouvons décrire les cas suivants :
- Cas 1 :
   ∘ Caméra + Radar : « objets détectés » signifie que la caméra et le radar ont tous les deux détecté des objets présents dans la scène. A ce stade, on ne sait pas si ces détections sont pertinentes ou pas, il peut s'agir de fausses détection de type « ghost », telle que celles présentées dans le cas du camion de service décrit auparavant.
   ∘ Lidar : « nuage de points » signifie que, comme nous l'avons mentionné auparavant, le lidar est un capteur qui permet de créer des nuages de points de l'environnement dans lequel il évolue. A ce stade, celui-ci renvoie un nuage, mais pas d'objets.
   ∘ Comparaison avec la carte 3D : dans ce cas on peut s'attendre à ce que la comparaison entre le nuage de point donné par le lidar et la carte 3D soit cohérente. C'est-à-dire que la différence entre ces deux informations est proche de zéro. Cependant, il est nécessaire de contrôler cela avec un niveau de corrélation. Une carte de cohérence peut permettre d'illustrer géographiquement l'absence d'incohérence.
   ∘ Conclusion : dans ce cas on considère qu'on s'attend à ce qu'il n'y ait en réalité pas d'objet sur la route, qu'il s'agit de « fausses » détections issues de la fusion entre le radar et la caméra. En effet, lors de la comparaison entre la carte 3D et le lidar, on compare plusieurs milliers de points 3D (capacité de mesure du lidar : 300°000 points / seconde) avec une carte 3D très résolue. On estime donc que la corrélation entre ces deux éléments très résolus ne peut pas être fausse en tout point du nuage et de la carte. Ainsi, un niveau de corrélation élevé ne peut résulter d'une erreur de mesure du lidar (lui-même composé de plusieurs organes de mesures)
- Cas 2 :
   ∘ Caméra + radar : « pas d'objet détecté » signifie que ni la caméra ni le radar n'ont détecté d'objet, ou que la fusion des mesures des deux capteurs ne renvoie pas d'objet.
   ∘ Lidar : « nuage de points + objets » signifie que le lidar renvoie un nuage de points, et à partir de celui-ci, un ou des objets ont pu être détectés.
   ∘ Comparaison avec la carte 3D : il existe une incohérence entre la carte 3D et les données issues du lidar. Comme précédemment, nous estimons également un niveau de corrélation entre les données issues du lidar et la carte 3D. La valeur de ce niveau de corrélation va donc nous informer sur la présence ou non d'objets. Une carte de cohérence, ou d'incohérence dans le cas présent, peut permettre de repérer géographiquement les incohérences.
   ∘ Conclusion : comme présenté précédemment, nous savons que les sources d'incohérence peuvent apparaitre à cause de différents phénomènes. Par conséquent en fonction de ces différents phénomènes, et de la valeur du niveau de corrélation, nous serons en mesure de conclure sur la présence effective d'objets ou pas.
- Cas 3 :
   ∘ Caméra + radar : on se retrouve dans le même cas de figure que le premier cas présenté, à savoir que la caméra, le radar et/ou la fusion de ces deux sources a ou ont détecté un objet.
   ∘ Lidar : « nuage de points + objets » signifie que le lidar renvoie un nuage de points, et à partir de celui-ci un ou des objets ont pu être détectés.
   ∘ Comparaison avec la carte 3D : les objets détectés par les différents capteurs sont directement « ajoutés » à la carte, notamment grâce au fait que l'on connait la position du véhicule dans la carte. On réalise alors notre opération de comparaison afin de déterminer le niveau de corrélation. De même, une carte de cohérence, ou d'incohérence, peut permettre de repérer géographiquement les incohérences.
   ∘ Conclusion : comme présenté précédemment, nous savons que les sources d'incohérence peuvent apparaitre à cause de différents phénomènes. Par conséquent en fonction de ces différents phénomènes, et de la valeur du niveau de corrélation, nous serons en mesure de conclure sur la présence effective d'objets ou pas.
- Cas 4 :
   ∘ Caméra + radar : dans ce cas, ni le radar ni la caméra, ni la fusion des deux, ne renvoient d'objets.
   ∘ Lidar : comme dans le premier cas, le lidar renvoie ici un nuage de points.
   ∘ Comparaison avec la carte 3D : à nouveau, nous comparons les données issues des capteurs et la carte 3D afin de déterminer un niveau de corrélation. Là aussi, une carte de cohérence peut permettre d'illustrer géographiquement l'absence d'incohérence.
   ∘ Conclusion : dans ce cas de figure, on s'attend à ce que le niveau de corrélation soit élevé, ce qui signifierait une absence d'objet.

Comme illustré dans la figure 2, représentant les différents cas évoqués dans le tableau ci-dessus, une carte de cohérence peut être établie. Elle sert également à positionner les différents objets qui pourraient être détectés.

Les figures 3 et 4 illustrent respectivement un exemple d'algorithme et un exemple d'architecture logicielle mettant en oeuvre l'invention.

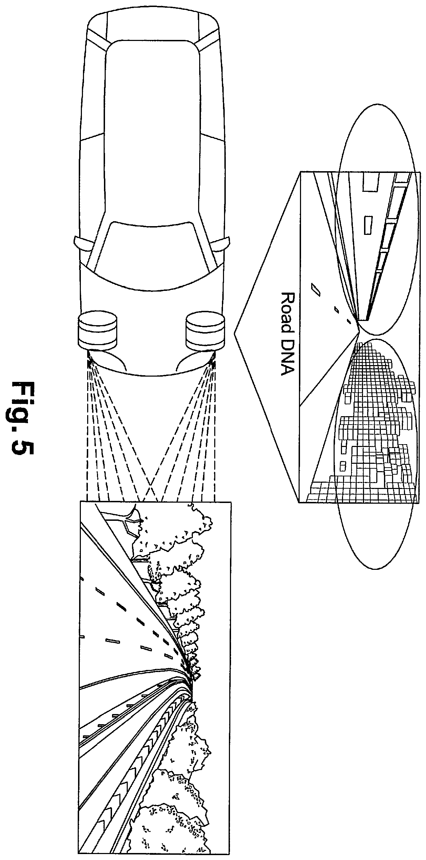

Comme illustré par la figure 5, dans un mode de réalisation avantageux, deux lidars peuvent permettent d'obtenir deux nuages de points avec des perspectives différentes et ainsi robustifier la fonction. L'utilisation de plusieurs lidars pour réaliser l'invention présentée a plusieurs avantages. Cela permet de rendre le calcul de corrélation plus fiable. Par ailleurs cela présente l'avantage de permettre un moyen de contrôle de bonne santé de chacun des lidars. En effet, il est possible de comparer chacune de leur mesure. Dans le présent exemple de réalisation, « Road DNA » (marque déposée) désigne une base cartographique très haute résolution commercialisée par TomTom.

Dans un mode de réalisation simplifié mais avantageux visant à limiter tant la charge du calculateur que l'espace mémoire alloué, on peut réaliser les mêmes traitements selon l'invention en utilisant seulement une cartographie 2D. Dans ce cas, les objets cartographiés sont les éléments de signalisation horizontale, communément appelé « lignes blanches » ou simplement « lignes ». En effet, comme nous l'avons présenté auparavant, les lidars mesurent une distance mais ont aussi la capacité de relever le niveau de réflectivité des objets. Par nature, les marquages (lignes, flèches, etc....) sont très réfléchissants et sont donc détectables grâce aux données issues des lidars. Ainsi, dès lors qu'une ligne ou une portion de ligne cartographiée n'est pas vue par les lidars et qu'aucun objet n'a été détecté, ces mêmes traitements utilisant un niveau de corrélation selon l'invention, très peu coûteux, peuvent permettre de détecter des objets supplémentaires, qui n'avaient pas été détectés par les caméras et les radars, comme par exemple un véhicule de service portant un panneau de signalisation, dès lors que celui-ci masque une ligne horizontale.

Dans ce mode de réalisation en 2D, il peut être avantageux de sécuriser les non-détections de lignes par les lidars, afin de ne pas être leurré dans les cas où une ligne ou une portion de ligne n'est pas simplement masquée par un objet, mais carrément effacée. Il semble alors opportun d'utiliser plusieurs capteurs afin de les redonder. Dans le cas d'une détection de dégradation de l'infrastructure (ligne effacée, etc....) on pourra alors profiter des installations « Vehicle-to-vehicle » (V2V) ou « Vehicle-to-Infrastructure » (V2I) afin de renvoyer des messages vers un serveur de base de données hébergé dans le « cloud » selon la terminologie anglo-saxonne. Si des messages s'accumulent au-delà d'un seuil prédéfini au niveau du serveur, celui-ci peut alors alerter sur une problématique de fraicheur de la carte à cet endroit et diffuser un message à l'intention des véhicules, toujours par l'intermédiaire de connexions V2V ou V2I, ou encore déclencher les actions nécessaire à la mise à jour de la carte.

La présente invention peut également être utile afin de détecter le dysfonctionnement d'un capteur. En effet, il est possible de comptabiliser les incohérences dans une zone donnée de la carte d'incohérence. On peut alors déterminer un seuil à partir duquel on considère que l'incohérence est due à un dysfonctionnement du capteur.

### Autres avantages :

L'invention décrite précédemment a encore pour principal avantage, outre l'amélioration de la robustesse de détection des cibles, d'être peu coûteuse : en effet, le lidar est une technologie économiquement intéressante, les dispositifs devenant entièrement électriques. De plus, les besoins de traitement sont relativement faibles compte-tenu des capacités de calcul, dès lors que l'on parvient à compresser la cartographie 3D avec une échelle raisonnable.

Enfin, une variante de l'invention pourrait être le positionnement de lidars sur le bord de la route. En effet, au lieu de positionner un LIDAR sur le véhicule, on pourrait imaginer un système de perception installé sur le bord de la route, comme sur un lampadaire par exemple. Ce lidar déporté pourrait réaliser la détection d'obstacle et informer les véhicules. Egalement, le lidar pourrait être placé sur un drone scrutant la route depuis le ciel. A nouveau, le drone informe les véhicules en cas de détection d'obstacles.

## Revendications

1. Procédé de détection d'obstacles dans une zone géographique donnée, le procédé comportant une étape de pré-détection par traitement de mesures prises dans ladite zone par plusieurs capteurs extéroceptifs incluant au moins un capteur de type lidar et au moins un capteur d'un type non-lidar, notamment de type radar ou de type caméra, le procédé comportant en outre une étape de confirmation de l'étape de pré-détection, incluant de comparer un nuage de points mesurés par le capteur de type lidar dans ladite zone avec des données cartographiques correspondant à ladite zone, la comparaison du nuage de points avec les données cartographiques incluant de calculer un niveau de corrélation entre les données dudit nuage et lesdites données cartographiques, le niveau de corrélation étant une fonction croissante de la quantité de données cohérentes entre les données du nuage et les données cartographiques, le niveau de corrélation valant 0 si aucune des données du nuage de points ne corrèle avec des données cartographiques, le niveau de corrélation valant 1 si toutes les données du nuage de points corrèlent avec des données cartographiques, le procédé étant caractériséen ce que, si le capteur non-lidar détecte un obstacle dans la zone, mais que le capteur lidar ne détecte pas ledit obstacle et que le niveau de corrélation entre le nuage de points lidar et les données cartographiques est supérieur à un seuil prédéfini compris entre 0,5 et 1, alors la détection dudit obstacle par le capteur non-lidar est infirmée .

2. Procédé selon la revendication 1, **caractérisé en ce que**, si le capteur non-lidar ne détecte aucun obstacle dans la zone, mais que le capteur lidar détecte un obstacle dans la zone et que le niveau de corrélation entre le nuage de points lidar et les données cartographiques est inférieur à un seuil prédéfini compris entre 0 et 0,5 alors la détection dudit obstacle par le capteur lidar est confirmée ou infirmée en fonction d'autres critères prédéfinis.

3. Procédé selon la revendication 1, **caractérisé en ce que**, si le capteur non-lidar détecte un obstacle dans la zone, et que le capteur lidar détecte également ledit obstacle dans la zone et que le niveau de corrélation entre le nuage de points lidar et les données cartographiques dans lesquelles a été ajouté ledit obstacle détecté est inférieur à un seuil prédéfini compris entre 0 et 0,5 , alors la détection dudit obstacle par le capteur non-lidar et par le capteur lidar est confirmée ou infirmée en fonction d'autres critères prédéfinis.

4. Procédé selon la revendication 1, **caractérisé en ce que**, si le capteur non-lidar ne détecte aucun obstacle dans la zone, et que le capteur lidar ne détecte aucun obstacle dans la zone non plus et que le niveau de corrélation entre le nuage de points lidar et les données cartographiques est supérieur à un seuil prédéfini compris entre 0,5 et 1, alors l'absence de détection par le capteur non-lidar et par le capteur lidar est confirmée.

5. Procédé selon la revendication 2 ou 3, **caractérisé en ce que** les autres critères incluent des seuils de niveau de corrélation.

6. Système comportant des moyens matériels et logiciels configurés pour mettre en oeuvre l'une quelconque des revendications précédentes.

7. Véhicule automobile comportant un système selon la revendication précédente.

## Patentansprüche

1. Verfahren zum Erkennen von Hindernissen in einem gegebenen geografischen Bereich, wobei das Verfahren einen Schritt des Vorerkennens durch Verarbeiten von Messungen umfasst, die in dem Bereich von mehreren exterozeptiven Sensoren aufgenommen werden, die mindestens einen Sensor vom Lidar-Typ und mindestens einen Sensor eines Nicht-Lidar-Typs, insbesondere vom Radar-Typ oder vom Kamera-Typ, beinhalten, wobei das Verfahren ferner einen Schritt des Bestätigens des Schritts des Vorerkennens umfasst, der beinhaltet, eine Wolke aus von dem Sensor vom Lidar-Typ in dem Gebiet gemessenen Punkten mit dem Gebiet entsprechenden kartografischen Daten zu vergleichen, wobei das Vergleichen der Punktwolke mit den kartografischen Daten beinhaltet, ein Korrelationsniveau zwischen den Daten der Wolke und den kartografischen Daten zu berechnen, wobei das Korrelationsniveau eine steigende Funktion der Menge kohärenter Daten zwischen den Daten der Wolke und den kartografischen Daten ist, wobei das Korrelationsniveau gleich 0 ist, wenn keine Daten der Punktwolke mit kartografischen Daten korrelieren, wobei das Korrelationsniveau gleich 1 ist, wenn alle Daten der Punktwolke mit kartografischen Daten korrelieren, wobei das Verfahren **dadurch gekennzeichnet ist, dass**, wenn der Nicht-Lidar-Sensor ein Hindernis in dem Bereich erkennt, aber der Lidar-Sensor das Hindernis nicht erkennt und das Korrelationsniveau zwischen der Lidar-Punktwolke und den kartografischen Daten über einem vorgegebenen Schwellenwert zwischen 0,5 und 1 liegt, das Erkennen des Hindernisses durch den Nicht-Lidar-Sensor nicht bestätigt wird.

2. Verfahren nach Anspruch 1, **dadurch gekennzeichnet, dass**, wenn der Nicht-Lidar-Sensor kein Hindernis in dem Bereich erkennt, aber der Lidar-Sensor ein Hindernis in dem Bereich erkennt und das Korrelationsniveau zwischen der Lidar-Punktwolke und den kartografischen Daten geringer als ein vorgegebener Schwellenwert zwischen 0 und 0,5 ist, das Erkennen des Hindernisses durch den Lidar-Sensor in Abhängigkeit von weiteren vorgegebenen Kriterien bestätigt oder nicht bestätigt wird.

3. Verfahren nach Anspruch 1, **dadurch gekennzeichnet, dass**, wenn der Nicht-Lidar-Sensor ein Hindernis in dem Bereich erkennt und der Lidar-Sensor das Hindernis in dem Bereich ebenfalls erkennt und das Korrelationsniveau zwischen der Lidar-Punktwolke und den kartografischen Daten, in denen das erkannte Hindernis hinzugefügt worden ist, geringer als ein vorgegebener Schwellenwert zwischen 0 und 0,5 ist, das Erkennen des Hindernisses durch den Nicht-Lidar-Sensor und durch den Lidar-Sensor in Abhängigkeit von weiteren vorgegebenen Kriterien bestätigt oder nicht bestätigt wird.

4. Verfahren nach Anspruch 1, **dadurch gekennzeichnet, dass**, wenn der Nicht-Lidar-Sensor kein Hindernis in dem Bereich erkennt und der Lidar-Sensor auch kein Hindernis in dem Bereich erkennt und das Korrelationsniveau zwischen der Lidar-Punktwolke und den kartografischen Daten größer als ein vorgegebener Schwellenwert zwischen 0,5 und 1 ist, das Nichterkennen durch den Nicht-Lidar-Sensor und durch den Lidar-Sensor bestätigt wird.

5. Verfahren nach Anspruch 2 oder 3, **dadurch gekennzeichnet, dass** die weiteren Kriterien Korrelationsniveau-Schwellenwerte beinhalten.

6. System, umfassend Hardware- und Softwaremittel, die dazu ausgestaltet sind, einen der vorhergehenden Ansprüche umzusetzen.

7. Kraftfahrzeug, umfassend ein System nach dem vorhergehenden Anspruch.

## Claims

1. Method for detecting obstacles in a given geographical area, the method comprising a step of pre-detection by processing of measurements taken in said area by several exteroceptive sensors including at least one sensor of lidar type and at least one sensor of a non-lidar type, in particular of radar type or of camera type, the method furthermore comprising a step of confirmation of the pre-detection step, including comparing a cloud of points measured by the sensor of lidar type in said area with map data corresponding to said area, the comparison of the cloud of points with the map data including calculating a level of correlation between the data of said cloud and said map data, the correlation level being an increasing function of the quantity of data that are consistent between the data of the cloud and the map data, the correlation level equalling 0 if none of the data of the cloud of points correlates with map data, the correlation level equalling 1 if all the data of the cloud of points correlate with map data, the method being **characterized in that**, if the non-lidar sensor detects an obstacle in the area, but the lidar sensor does not detect said obstacle and the level of correlation between the lidar cloud of points and the map data is greater than a predefined threshold lying between 0.5 and 1, then the detection of said obstacle by the non-lidar sensor is denied.

2. Method according to Claim 1, **characterized in that**, if the non-lidar sensor does not detect any obstacle in the area, but the lidar sensor detects an obstacle in the area and the level of correlation between the lidar cloud of points and the map data is less than a predefined threshold lying between 0 and 0.5, then the detection of said obstacle by the lidar sensor is confirmed or denied as a function of other predefined criteria.

3. Method according to Claim 1, **characterized in that**, if the non-lidar sensor detects an obstacle in the area, and the lidar sensor also detects said obstacle in the area and the level of correlation between the lidar cloud of points and the map data to which said detected obstacle has been added is less than a predefined threshold lying between 0 and 0.5, then the detection of said obstacle by the non-lidar sensor and by the lidar sensor is confirmed or denied as a function of other predefined criteria.

4. Method according to Claim 1, **characterized in that**, if the non-lidar sensor does not detect any obstacle in the area, and the lidar sensor does not detect any obstacle in the area either, and the level of correlation between the lidar cloud of points and the map data is greater than a predefined threshold lying between 0.5 and 1, then the absence of detection by the non-lidar sensor and by the lidar sensor is confirmed.

5. Method according to Claim 2 or 3, **characterized in that** the other criteria include correlation level thresholds.

6. System comprising hardware means and software means configured to implement any one of the preceding claims.

7. Automotive vehicle comprising a system according to the preceding claim.
